# EUROPEAN PATENT SPECIFICATION

(11) **EP 3 318 744 B1**
(45) Date of publication and mention of the grant of the patent: **17.02.2021**
(21) Application number: 16846860.1
(22) Date of filing: 13.09.2016
(51) Int. Cl.: F02K 9/46, F02K 9/56

(54) **LIQUID ROCKET ENGINE USING PUMP DRIVEN BY ELECTRIC MOTOR**
FLÜSSIGKEITSRAKETENMOTOR MIT ELEKTROMOTORISCH ANGETRIEBENER PUMPE
MOTEUR-FUSÉE À LIQUIDE UTILISANT UNE POMPE ENTRAÎNÉE PAR UN MOTEUR ÉLECTRIQUE

(30) Priority: 14.09.2015 KR 20150129673
(43) Date of publication of application: 09.05.2018
(73) Proprietor: Korea Aerospace Research Institute, Daejeon 34133 (KR)
(72) Inventor: KWAK, Hyun Duck, Daejeon 34152 (KR); KIM, Dae Jin, Daejeon 35234 (KR); KIM, Jin Han, Sejong 30130 (KR); LEE, Hang Gi, Daejeon 34071 (KR); CHOI, Chang Ho, Daejeon 34021 (KR); JEONG, Eun Hwan, Daejeon 34085 (KR)
(74) Representative: Patentanwälte Ruff, Wilhelm, Beier, Dauster & Partner mbB
(86) International application number: PCT/KR2016/010317
(87) International publication number: WO 2017/048039

(56) References cited:
- WO-A2-99/65769
- JP-A- 2014 159 769
- KR-A- 20000 012 903
- KR-B1- 100 925 858
- KR-B1- 101 409 938
- US-A1- 2014 260 186
- US-A1- 2014 283 499

## Description

The present invention relates to a liquid rocket engine using a pump driven by an electric motor, according to the preamble of claim 1.

Generally, turbopump type engines for rockets, which use a liquid propellant, send an oxidant and a fuel at a high pressure to a main combustor by using a high-temperature gas generated from a gas generator, thereby generating thrust.

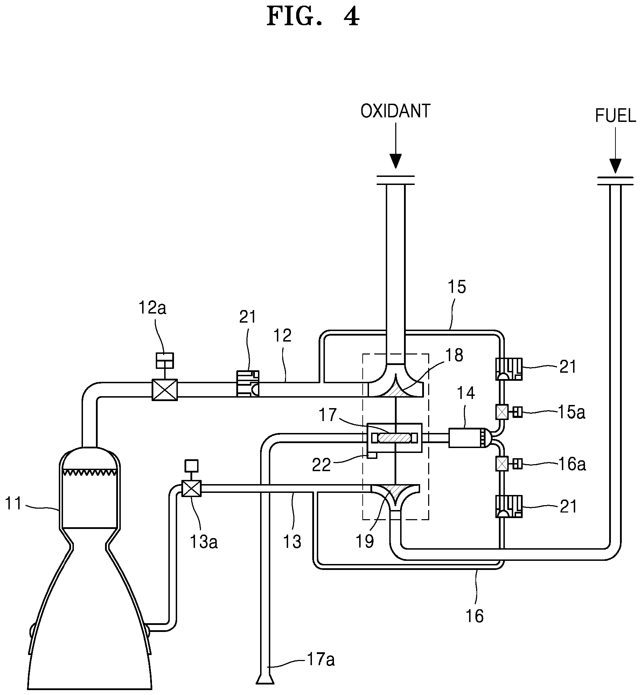

As illustrated in FIG. 4, a turbopump type engine for a rocket which uses a liquid propellant includes a main combustor 11 to combust an oxidant and a fuel, a main oxidant line 12 to guide an oxidant to the main combustor 11, a main fuel line 13 to guide a fuel to the main combustor 11, a gas generator 14 to generate a high-temperature and high-pressure gas, an auxiliary oxidant line 15 to guide a part of the oxidant to the gas generator 14, an auxiliary fuel line 16 to guide a part of the fuel to the gas generator 14, a turbine 17 to be rotated by the high-temperature and high-pressure gas of the gas generator 14, and an oxidant pump 18 and a fuel pump 19 that are coupled uniaxially to the turbine 17.

In addition, as illustrated in FIG. 4, the turbopump type engine for a rocket which uses a liquid propellant includes a main oxidant opening/closing valve 12a to turn on/off the oxidant guided to the main combustor 11, a main fuel opening/closing valve 13a to turn on/off the fuel guided to the main combustor 11, an auxiliary oxidant opening/closing valve 15a to turn on/off the oxidant guided to the gas generator 14, an auxiliary fuel opening/closing valve 16a to turn on/off the fuel guided to the gas generator 14, and a gas discharge pipe 17a to discharge gas passed through the turbine 17 to the outside. Reference numeral "21", which has not yet been described, denotes correction valves or orifices to correct a thrust error, and reference numeral "22" denotes a pyro starter or a turbine starter.

Hereinafter, a process of starting the turbopump type engine for a rocket which uses a liquid propellant will be described with reference to FIG. 4.

First, the turbine 17 is driven by the turbine starter 22 to increase a pressure via the oxidant pump 18 and the fuel pump 19. In this state, the auxiliary oxidant valve 15a and the auxiliary fuel valve 16a are opened to supply the oxidant and the fuel (hereinafter, referred to as "propellant") to the gas generator 14. The supplied propellant is combusted in the gas generator 14 to generate a combustion gas, and the turbine 17 is driven again by a high-temperature combustion gas to rotate the oxidant pump 18 and the fuel pump 19 (hereinafter, collectively referred to as "pumps"). Subsequently, the gas generator 14 is driven to open the main oxidant valve 12a and the main fuel valve 13a (hereinafter, collectively referred to as "main valves") when the pumps 18 and 19 produce a certain degree of pressure to supply the propellant to the main combustor 11. The supplied propellant is combusted in the main combustor 11 to be discharged as a high-temperature gas via nozzles to the outside. The turbopump type engine is started through these processes.

However, in the liquid rocket engine including a turbine and a gas generator, the oxidant and the fuel need to be further loaded to drive the gas generator, and thus a launch weight is increased. In addition, a gas that drives the turbine is thrown out, and thus, energy loss occurs.

Laid-open publication US 2014/0283499 A1 discloses a turbopump type engine which comprises an electric pump within a liquid oxygen tank to pump liquid oxygen, and an electric pump within a liquid hydrogen tank to pump liquid hydrogen. Patent publication US 6,457,306 B1 and laid-open publication US 2014/0260186 A1 disclose a liquid rocket engine according to the preamble of claim 1 that does not include a gas generator and a turbine assembly and includes an electric motor for driving a liquid propellant pump. However, a member for cooling the electric motor is not disclosed there, and thus a configuration for cooling an overheated electric motor or a battery for supplying power to a motor is needed.

It is the technical problem underlying the invention to provide a liquid rocket engine including a pump driven by an electric motor instead of using a gas generator and a turbine, so that the amount of a propellant may be decreased and overheating of an electric motor may be efficiently avoided.

The invention solves this problem by providing a liquid rocked engine having the features of claim 1. Advantageous embodiments of the invention are mentioned in the dependent claims, the wording of which is herewith incorporated into the description by reference.
The liquid rocked engine of the invention uses a pump driven by an electric motor instead of using a gas generator and a turbine so that a system may be simplified, and overheated electric motor may be efficiently cooled by circulating a propellant (an oxidant or a fuel).

According to the invention, in a liquid rocket engine using a pump driven by an electric motor and having the above-described configuration, a pump is driven by an electric motor instead of using a gas generator and a turbine, and thus, the amount of a propellant may be decreased, and an overheated electric motor may be efficiently cooled by circulating the propellant.

Advantageous embodiments of the invention are described in further detail below and shown in the drawings together with the prior art embodiment explained above. In the drawings:
FIG. 1A is a conceptual view illustrating a structure of a liquid rocket engine using a pump driven by an electric motor, according to a first embodiment of the present invention, and FIGS. 1B and 1C, which correspond to FIG. 1A, are conceptual views respectively illustrating structures of liquid rocket engines according to second and third embodiments of the present invention.
FIG. 2 is a longitudinal sectional view illustrating a structure of an electric motor casing for cooling according to the present invention.
FIG. 3 is a view illustrating a cooling part having a different structure from that of FIG. 2 according to the present invention.
FIG. 4 is a structural view illustrating a structure of a conventional liquid rocket engine.

An embodiment of the present invention provides a liquid rocket engine using a pump driven by an electric motor, the liquid rocket engine including: a main combustor to receive and combust an oxidant and a fuel; a main oxidant line to guide the oxidant accommodated in an oxidant tank to the main combustor; a main fuel line to guide the fuel accommodated in a fuel tank to the main combustor; an oxidant pump positioned at the main oxidant line; a fuel pump positioned at the main fuel line; an electric motor positioned between the oxidant pump and the fuel pump to uniaxially drive the oxidant pump and the fuel pump; a cooling line branched from a side of the main oxidant line to guide a part of the oxidant to the electric motor, or branched from a side of the main fuel line to guide a part of the fuel to the electric motor; a cooling part connected to the cooling line so as to allow fluid flow therebetween; and a condenser installed at the cooling line, in which at least one of the oxidant and the fuel is transferred to the cooling line to cool the electric motor.

In addition, an end of the cooling line may be branched from the main oxidant line between the main combustor and the oxidant pump, and another end thereof may be connected to the main oxidant line between the oxidant pump and the oxidant tank.

In addition, an end of the cooling line may be branched from the main fuel line between the main combustor and the fuel pump, and another end thereof may be connected to the main fuel line between the fuel pump and the fuel tank.

In addition, an end of the cooling line is connected to the oxidant pump and another end thereof is exposed to the outside, and thus the oxidant leaked from the oxidant pump may be heat-exchanged with the electric motor and discharged to the outside.

In addition, at least one of the oxidant and the fuel may pass through the cooling part and then be condensed in the condenser.

In addition, the liquid rocket engine may further include an opening/closing valve positioned between the end of the cooling line and the electric motor.

In addition, the cooling part may have a barrel shape to accommodate the electric motor and have a flow path therein.

In addition, the liquid rocket engine may further include a gear box positioned between the electric motor and the oxidant pump to adjust a rotational speed of the oxidant pump, or positioned between the electric motor and the fuel pump to adjust a rotational speed of the fuel pump.

In addition, the cooling part may have a coil shape wound on an outer circumferential surface of the electric motor, and be connected to the end of the cooling line and the other end of the cooling line.

In addition, the liquid rocket engine may further include a battery connected to a side of the cooling line and supplying power to the electric motor.

In addition, the liquid rocket engine may further include an igniter connected to the battery, and installed at a side of the main combustor to ignite the main combustor by electric spark.

Hereinafter, example embodiments of the present invention will be described in detail with reference to the accompanying drawings and the following description. However, the present invention should not be construed as being limited to embodiments set forth herein and may be embodied in different forms. Rather, these embodiments are provided so that this disclosure will be thorough and complete, and will fully convey the scope of the invention to those skilled in the art.

In addition, in the description of the present invention, like reference numerals denote like constitutional elements, and thus detailed descriptions thereof will be provided once.

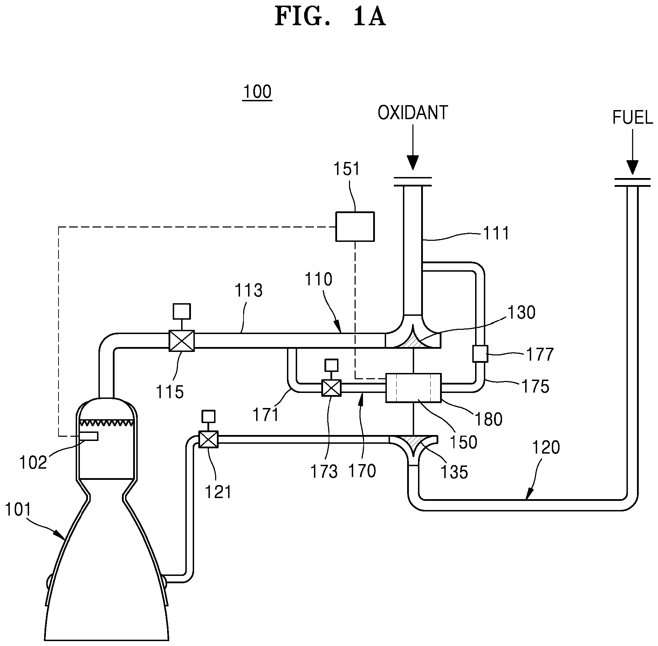

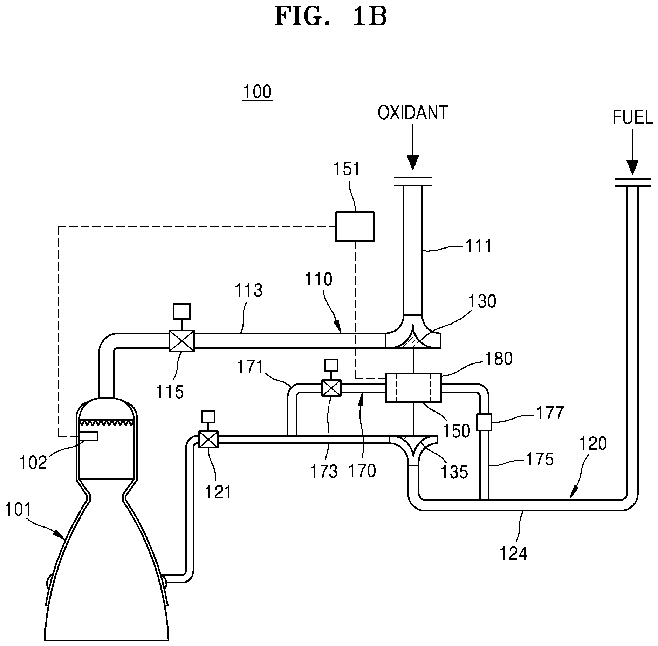

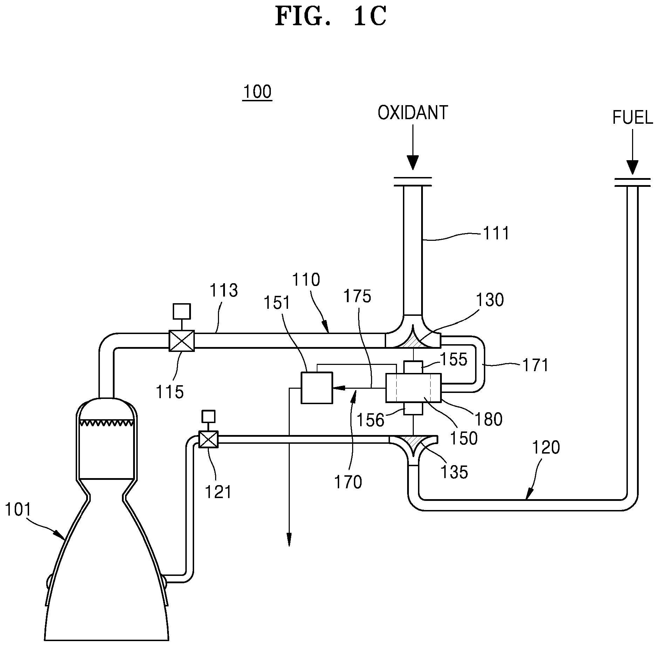

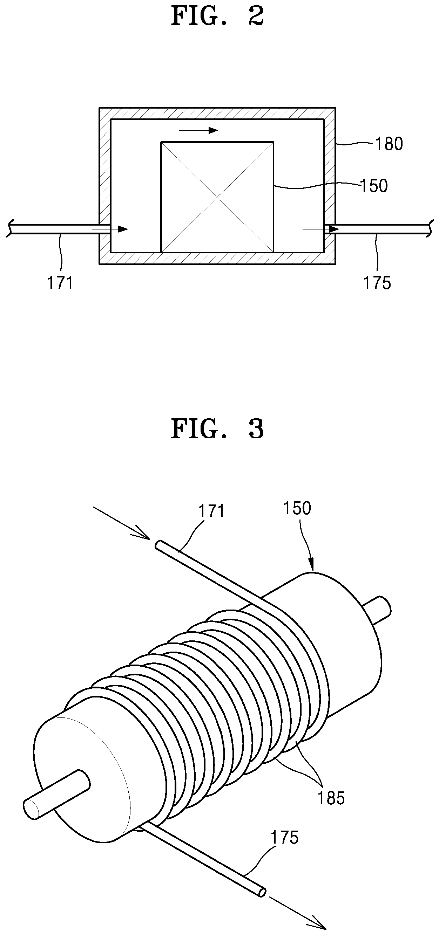

FIG. 1A is a conceptual view illustrating a structure of a liquid rocket engine 100 using a pump driven by an electric motor, according to a first embodiment of the present invention, and FIGS. 1B and 1C, which correspond to FIG. 1A, are conceptual views respectively illustrating structures of liquid rocket engines 100 according to second and third embodiments of the present invention. FIG. 2 is a longitudinal sectional view illustrating a structure of an electric motor casing for cooling according to the present invention.

Referring to FIG. 1A, the liquid rocket engine 100 using a pump driven by an electric motor according to the present invention includes an electric motor instead of a turbine and a gas generator of an existing liquid rocket engine. Thus, the amount of a propellant (an oxidant and a fuel) further loaded to drive the gas generator may be reduced. The liquid rocket engine 100 further includes a cooling line and a cooling part to cool the electric motor.

Specifically, the liquid rocket engine 100 using a pump driven by an electric motor according to the present invention includes a main combustor 101 to receive and combust an oxidant and a fuel, a main oxidant line 110 to guide the oxidant accommodated in an oxidant tank to the main combustor 101, a main fuel line 120 to guide the fuel accommodated in a fuel tank to the main combustor, an oxidant pump 130 and a fuel pump 135 that are respectively installed at the main oxidant line 110 and the main fuel line 120, an electric motor 150 to drive the oxidant pump 130 and the fuel pump 135, a battery 151 to supply power to the electric motor 150, a cooling line 170, and a cooling part. In addition, the liquid rocket engine 100 includes a main oxidant opening/closing valve 115 to turn on/off the oxidant guided to the main combustor 101 and a main fuel opening/closing valve 121 to turn on/off the fuel guided to the main combustor 101.

A process of operating the liquid rocket engine 100 using a pump driven by an electric motor according to the present invention will now be described. When the electric motor 150 is driven when the main oxidant opening/closing valve 115 and the main fuel opening/closing valve 121 are opened, the oxidant and the fuel are supplied to the main combustor 101 via the main oxidant line 110 and the main fuel line 120, respectively, while the oxidant pump 130 and the fuel pump 135 are rotated. The oxidant and the fuel supplied to the main combustor 101 are combusted, converted into a high-temperature gas, and discharged to the outside.

In addition, the electric motor 150 is overheated when continuously driven, and thus the cooling line 170 and the cooling part, which have been described above, are configured to cool the overheated electric motor 150.

The cooling line 170 is connected to a side of the main oxidant line 110 so as to allow fluid flow therebetween and guides a part of the oxidant to the electric motor 150, and may include a supply part 171 to supply the oxidant to the cooling part, and a discharge part 175 to guide the oxidant discharged from the cooling part.

The supply part 171 may be configured such that a cooling line opening/closing valve 173 is installed to supply the oxidant only when the electric motor 150 is overheated, or an opening/closing valve is omitted and a cooling operation is performed all the time.

The cooling part is configured to cool the electric motor 150 by the oxidant supplied via the cooling line 170, and, as illustrated in FIG. 2, may be an electric motor casing 180 for cooling having a barrel shape to accommodate the electric motor 150, and a flow path (not shown) may be formed in the electric motor casing 180.

Meanwhile, the main oxidant line 110 includes, with respect to the oxidant pump 130, an inlet-side oxidant line part 111 connected to the oxidant tank and an outlet-side oxidant line part 113 connected to the main combustor 101.

In this regard, the supply part 171 may be connected to the outlet-side oxidant line part 113, and the discharge part 175 may be connected to the inlet-side oxidant line part 111. This configuration is preferable because an internal pressure of the outlet-side oxidant line part 113 is higher than that of the inlet-side oxidant line part 111, and thus, cooling may be more efficiently performed without a pressure drop or a flow rate reduction in the inlet-side oxidant line part 111. On the other hand, when the supply part 171 is connected to the inlet-side oxidant line part 111, a pressure or a flow rate of the oxidant supplied to the oxidant pump 130 is decreased, which results in reduced efficiency of the oxidant pump 130.

The oxidant may be liquefied oxygen and be present as a liquid in the main oxidant line 110, however, it may diffuse into the electric motor casing 180 for cooling at the supply part and may be vaporized while being heated due to contact with the electric motor 150.

In addition, the vaporized oxidant is converted back into a liquefied form through the condenser 177 installed at the discharge part 175 and introduced into the outlet-side oxidant line part 113, and thus, through this process, the oxidant cools the electric motor 150.

As such, the oxidant supplied to the electric motor casing 180 for cooling to cool the electric motor 150 is introduced back into the main oxidant line, and thus a liquid rocket engine system may operate without oxidant loss.

Meanwhile, gear boxes 155 and 156 may be installed between the electric motor 150 and the oxidant pump 130 or between the electric motor 150 and the fuel pump 135 to control a rotation speed of the oxidant pump 130 or the fuel pump 135 to be increased or decreased.

To ignite the main combustor 101, an igniter 102 may be installed on a side of the main combustor 101. The igniter 102 is driven in an electric spark manner, and may receive a driving source from the battery 151. The battery 151 may transmit a driving force to the electric motor 150, and may be spaced apart from or positioned adjacent to the electric motor 150.

A conventional liquid rocket engine can be ignited using a TEAL cartridge. When a fuel flows into the TEAL cartridge, an internal pressure thereof increases, and then, when oxygen is introduced thereinto, spontaneous ignition occurs. The generated flame travels to a main combustor and, as a result, the liquid rocket engine is ignited.

According to a conventional ignition method, the number of engine ignition events is limited. When the engine needs to be restarted, a TEAL cartridge is required in accordance with the number of times of use. In addition, the TEAL cartridge is in the form of aluminum powder, and thus there is a possibility of explosion in handling, and a control valve must be further installed to control the TEAL cartridge.

However, the liquid rocket engine 100 according to an embodiment of the present invention is ignited using electric spark, and thus may have improved stability. In addition, the igniter 102 may receive energy from the battery 151 configured to drive the electric motor 150, and thus system volume and weight may be reduced. In addition, since the igniter 102 continuously receives an energy source from the battery 151, the engine may be reignited without installation of an additional cartridge, or the like.

Meanwhile, referring to FIG. 1B, the second embodiment of the present invention differs from the above-described first embodiment in that a fuel is used as a coolant for cooling an electric motor or the like, instead of using an oxidant.

Thus, a cooling line consists of the supply part 171 to supply the fuel to the cooling part, e.g., the electric motor casing 180 for cooling, and the discharge part 175 to guide the fuel discharged from the cooling part.

In addition, the main fuel line 120 includes, with respect to a fuel pump, an inlet-side fuel line part 124 connected to the fuel tank and an outlet-side fuel line part 125 connected to a main combustor, and the supply part 171 is connected to the outlet-side fuel line part 125, and the discharge part 175 is connected to the inlet-side fuel line part 124.

Meanwhile, referring to FIG. 1C, the third embodiment of the present invention is the same as the above-described first embodiment in that an oxidant is used as a coolant for cooling an electric motor or the like, but differs therefrom in that the oxidant used in cooling is discharged to the outside, instead of being bypassed.

For this, a side of the supply part 171 of a cooling line is connected to the oxidant pump 130 and another side thereof is connected to the cooling part, in particular, the casing 180, and thus the oxidant is supplied to the casing 180, and a side of the discharge part 175 is connected to the casing 180 and another thereof is exposed to the outside, and thus the oxidant is guided to be discharged to the outside.

In this regard, a reason why the a side of the supply part 171 is connected to the oxidant pump 130 is that, when the liquid rocket engine is operated, the oxidant is necessarily leaked from a side of the oxidant pump, but, through such a configuration, the leaked oxidant is used to cool an electric motor or the like and then discharged to the outside, instead of directly discharging the leaked oxidant to the outside.

Meanwhile, the cooling line may also be used to cool the battery 151 as well as the electric motor 150.

FIG. 3 is a view illustrating a cooling part of the present invention having a different structure from that of FIG. 2.

Referring to FIG. 3, unlike the above-described embodiments, in the present embodiment, the cooling part is wound on an outer circumferential surface of the electric motor 150, and is configured as a coil-shaped cooling pipe 185 having an end connected to the supply part 171 so as to allow fluid flow therebetween and another end connected to the discharge part 175 so as to allow fluid flow therebetween.

In addition, the cooling pipe 185 has the same diameter as that of the supply part 171 and the discharge part 175, and thus allows a liquid oxidant as a coolant to be circulated therethrough without being vaporized.

The above-described embodiments of the present invention are provided for illustrative purposes only, and it will be understood by those of ordinary skill in the art to which the present invention pertains that various changes and other equivalent embodiments may be made therefrom. Thus, it will be understood that embodiments mentioned in the detailed description are not intended to limit the scope of the present invention.

According to an embodiment of the present invention, a liquid rocket engine, in which the amount of a used propellant may be reduced, and an overheated electric motor may be efficiently cooled by circulating the propellant, is provided, and embodiments of the present invention may be applied to rocket engines, propulsion devices, aerospace equipment, and the like that use an industrially applicable liquid rocket engine.

## Claims

1. A liquid rocket engine (100) using a pump driven by an electric motor, the liquid rocket engine comprising:
a main combustor (101) to receive and combust an oxidant and a fuel;
a main oxidant line (110) to guide the oxidant accommodated in an oxidant tank to the main combustor (101);
a main fuel line (120) to guide the fuel accommodated in a fuel tank to the main combustor (101);
an oxidant pump (130) installed at the main oxidant line (110); and
a fuel pump (135) installed at the main fuel line (120);
**characterized by** an electric motor (150) installed between the oxidant pump (130) and the fuel pump (135) and uniaxially driving the oxidant pump (130) and the fuel pump (135);
a cooling line (170) branched from a side of the main oxidant line (110) to guide a part of the oxidant to the electric motor (150), or branched from a side of the main fuel line (120) to guide a part of the fuel to the electric motor (150); and
a cooling part connected to the cooling line (170) so as to allow fluid flow therebetween and installed at the electric motor;
wherein at least one of the oxidant and the fuel is transferred to the cooling line (170) to cool the electric motor (150).

2. The liquid rocket engine of claim 1, wherein the cooling line (170) has an end branched from the main oxidant line (110) between the main combustor (101) and the oxidant pump (130) and another end connected to the main oxidant line (110) between the oxidant pump (130) and the oxidant tank.

3. The liquid rocket engine of claim 1, wherein the cooling line (170) has an end branched from the main fuel line (120) between the main combustor (101) and the fuel pump (135) and another end connected to the main fuel line (120) between the fuel pump (135) and the fuel tank.

4. The liquid rocket engine of claim 1, wherein the cooling line (170) has an end connected to the oxidant pump (130) and another end exposed to the outside, wherein the oxidant leaked from the oxidant pump (130) is heat-exchanged with the electric motor (150) and discharged to the outside.

5. The liquid rocket engine of claim 1, further comprising a condenser (177) installed at the cooling line (170), wherein at least one of the oxidant and the fuel passes through the cooling part and then is condensed in the condenser (177).

6. The liquid rocket engine of claim 1, further comprising an opening/closing valve (173) disposed between an end of the cooling line (170) and the electric motor (150).

7. The liquid rocket engine of claim 1, wherein the cooling part has a barrel shape to accommodate the electric motor (150) and a flow path therein.

8. The liquid rocket engine of claim 1, further comprising:
a gear box (155; 156) disposed between the electric motor (150) and the oxidant pump (130) to adjust a rotation speed of the oxidant pump (130), or disposed between the electric motor and the fuel pump (135) to adjust a rotation speed of the fuel pump (135).

9. The liquid rocket engine of claim 1, wherein the cooling part has a coil shape by being wound around an outer circumferential surface of the electric motor (150), and is connected to an end of the cooling line (170) and another end of the cooling line (170).

10. The liquid rocket engine of claim 1, further comprising a battery (151) connected to a side of the cooling line (170) and configured to supply power to the electric motor (150).

11. The liquid rocket engine of claim 10, further comprising an igniter (102) connected to the battery (151), and installed on a side of the main combustor (101) to ignite the main combustor (101) by electric spark.

## Patentansprüche

1. Flüssigkeitsraketentriebwerk (100), das eine von einem Elektromotor angetriebene Pumpe verwendet, wobei das Flüssigkeitsraketentriebwerk umfasst:
eine Hauptbrennkammer (101), die ein Oxidationsmittel und einen Treibstoff erhält und verbrennt;
eine Oxidationsmittel-Hauptleitung (110), die das in einem Oxidationsmitteltank aufgenommene Oxidationsmittel zur Hauptbrennkammer (101) führt;
eine Treibstoff-Hauptleitung (120), die den in einem Treibstofftank aufgenommenen Treibstoff zur Hauptbrennkammer (101) führt;
eine Oxidationsmittelpumpe (130), die an der Oxidationsmittel-Hauptleitung (110) installiert ist; und
eine Treibstoffpumpe (135), die an der Treibstoff-Hauptleitung (120) installiert ist;
**gekennzeichnet durch**
einen Elektromotor (150), der zwischen der Oxidationsmittelpumpe (130) und der Treibstoffpumpe (135) installiert ist und die Oxidationsmittelpumpe (130) sowie die Treibstoffpumpe (135) uniaxial antreibt;
eine Kühlleitung (170), die von einer Seite der Oxidationsmittel-Hauptleitung (110) abzweigt, so dass ein Teil des Oxidationsmittels zum Elektromotor (150) geführt wird, oder von einer Seite der Treibstoff-Hauptleitung (120) abzweigt, so dass ein Teil des Treibstoffs zum Elektromotor (150) geführt wird; und
ein Kühlteil, das mit der Kühlleitung (170) so verbunden ist, dass eine Fluidströmung dazwischen möglich ist, und das am Elektromotor installiert ist;
wobei das Oxidationsmittel und/oder der Treibstoff zur Kühlleitung (170) überführt wird, um den Elektromotor (150) zu kühlen.

2. Flüssigkeitsraketentriebwerk nach Anspruch 1, wobei die Kühlleitung (170) ein Ende, das von der Oxidationsmittel-Hauptleitung (110) zwischen der Hauptbrennkammer (101) und der Oxidationsmittelpumpe (130) abzweigt, und ein weiteres Ende, das zwischen der Oxidationsmittelpumpe (130) und dem Oxidationsmitteltank mit der Oxidationsmittel-Hauptleitung (110) verbunden ist, aufweist.

3. Flüssigkeitsraketentriebwerk nach Anspruch 1, wobei die Kühlleitung (170) ein Ende, das von der Treibstoff-Hauptleitung (120) zwischen der Hauptbrennkammer (101) und der Treibstoffpumpe (135) abzweigt, und ein weiteres Ende, das zwischen der Treibstoffpumpe (135) und dem Treibstofftank mit der Treibstoff-Hauptleitung (120) verbunden ist, aufweist.

4. Flüssigkeitsraketentriebwerk nach Anspruch 1, wobei die Kühlleitung (170) ein Ende, das mit der Oxidationsmittelpumpe (130) verbunden ist, und ein weiteres Ende, das nach außen offen ist, aufweist, wobei das aus der Oxidationsmittelpumpe (130) austretende Oxidationsmittel einen Wärmeaustausch mit dem Elektromotor (150) erfährt und nach außen abgegeben wird.

5. Flüssigkeitsraketentriebwerk nach Anspruch 1, weiter umfassend einen Kondensor (177), der an der Kühlleitung (170) installiert ist, wobei das Oxidationsmittel und/oder der Treibstoff durch das Kühlteil läuft und dann im Kondensor (177) kondensiert.

6. Flüssigkeitsraketentriebwerk nach Anspruch 1, weiter umfassend ein Öffnungs- /Schließventil (173), das zwischen einem Ende der Kühlleitung (170) und dem Elektromotor (150) angeordnet ist.

7. Flüssigkeitsraketentriebwerk nach Anspruch 1, wobei das Kühlteil in Form einer Trommel ausgebildet ist, um den Elektromotor (150) und einen Strömungsweg darin aufzunehmen.

8. Flüssigkeitsraketentriebwerk nach Anspruch 1, weiter umfassend:
einen Getriebekasten (155; 156), der zwischen dem Elektromotor (150) und der Oxidationsmittelpumpe (130) angeordnet ist, um eine Drehzahl der Oxidationsmittelpumpe (130) einzustellen, oder zwischen dem Elektromotor und der Treibstoffpumpe (135) angeordnet ist, um eine Drehzahl der Treibstoffpumpe (135) einzustellen.

9. Flüssigkeitsraketentriebwerk nach Anspruch 1, wobei das Kühlteil in Form einer Spirale ausgebildet ist, die um eine Außenumfangsfläche des Elektromotors (150) gewickelt ist, und mit einem Ende der Kühlerleitung (170) und einem weiteren Ende der Kühlleitung (170) verbunden ist.

10. Flüssigkeitsraketentriebwerk nach Anspruch 1, weiter umfassend eine Batterie (151), die mit einer Seite der Kühlleitung (170) verbunden und dazu konfiguriert ist, dass sie den Elektromotor (150) mit Energie versorgt.

11. Flüssigkeitsraketentriebwerk nach Anspruch 10, weiter umfassend eine Zündeinrichtung (102), die mit der Batterie (151) verbunden und auf einer Seite der Hauptbrennkammer (101) installiert ist, um die Hauptbrennkammer (101) durch elektrische Funken zu zünden.

## Revendications

1. Moteur à propulseur liquide (100) utilisant une pompe entraînée par un moteur électrique, le moteur à propulseur liquide comprenant :
une chambre de combustion principale (101) destinée à recevoir un agent oxydant et un combustible, et à en assurer la combustion ;
une conduite principale d'agent oxydant (110) destinée à guider l'agent oxydant reçu dans un réservoir d'agent oxydant vers la chambre de combustion principale (101) ;
une conduite principale de combustible (120) destinée à guider le combustible reçu dans un réservoir de combustible vers la chambre de combustion principale (101) ;
une pompe d'agent oxydant (130) installée sur la conduite principale d'agent oxydant (110) ; et
une pompe de combustible (135) installée sur la conduite principale de combustible (120) ;
**caractérisé par** un moteur électrique (150) installé entre la pompe d'agent oxydant (130) et la pompe de combustible (135) et entraînant de manière uni-axiale la pompe d'agent oxydant (130) et la pompe de combustible (135) ;
une conduite de refroidissement (170) dérivée depuis un côté de la conduite principale d'agent oxydant (110) pour guider une partie de l'agent oxydant vers le moteur électrique (150), ou dérivée depuis un côté de la conduite principale de combustible (120) pour guider une partie du combustible vers le moteur électrique (150) ; et
une partie de refroidissement raccordée à la conduite de refroidissement (170), de façon à permettre un écoulement de fluide entre ces dernières, et installée au niveau du moteur électrique ;
dans lequel au moins l'un de l'agent oxydant et du combustible est transféré vers la conduite de refroidissement (170) pour refroidir le moteur électrique (150) .

2. Moteur à propulseur liquide selon la revendication 1, dans lequel la conduite de refroidissement (170) comporte une extrémité dérivée de la conduite principale d'agent oxydant (110) entre la chambre de combustion principale (101) et la pompe d'agent oxydant (130) et une autre extrémité raccordée à la conduite principale d'agent oxydant (110) entre la pompe d'agent oxydant (130) et le réservoir d'agent oxydant.

3. Moteur à propulseur liquide selon la revendication 1, dans lequel la conduite de refroidissement (170) comporte une extrémité dérivée de la conduite principale de combustible (120) entre la chambre de combustion principale (101) et la pompe de combustible (135) et une autre extrémité raccordée à la conduite principale de combustible (120) entre la pompe de combustible (135) et le réservoir de combustible.

4. Moteur à propulseur liquide selon la revendication 1, dans lequel la conduite de refroidissement (170) comporte une extrémité raccordée à la pompe d'agent oxydant (130) et une autre extrémité ouverte sur l'extérieur, dans lequel l'agent oxydant qui fuit de la pompe d'agent oxydant (130) fait l'objet d'un échange de chaleur avec le moteur électrique (150) et est déchargé vers l'extérieur.

5. Moteur à propulseur liquide selon la revendication 1, comprenant en outre un condenseur (177) installé sur la conduite de refroidissement (170), dans lequel au moins l'un de l'agent oxydant et du combustible passe par la partie de refroidissement et est ensuite condensé dans le condenseur (177).

6. Moteur à propulseur liquide selon la revendication 1, comprenant en outre une soupape à ouverture/fermeture (173) disposée entre une extrémité de la conduite de refroidissement (170) et le moteur électrique (150).

7. Moteur à propulseur liquide selon la revendication 1, dans lequel la partie de refroidissement a une forme de fût pour recevoir le moteur électrique (150) et un trajet d'écoulement en son sein.

8. Moteur à propulseur liquide selon la revendication 1, comprenant en outre :
une boîte à engrenages (155 ; 156) disposée entre le moteur électrique (150) et la pompe d'agent oxydant (130) pour régler une vitesse de rotation de la pompe d'agent oxydant (130), ou disposée entre le moteur électrique et la pompe de combustible (135) pour régler la vitesse de rotation de la pompe de combustible (135).

9. Moteur à propulseur liquide selon la revendication 1, dans lequel la partie de refroidissement a une forme de serpentin de par son enroulement autour d'une surface circonférentielle extérieure du moteur électrique (150), et est raccordée à une extrémité de la conduite de refroidissement (170) et à une autre extrémité de la conduite de refroidissement (170).

10. Moteur à propulseur liquide selon la revendication 1, comprenant en outre une batterie (151) connectée à un côté de la conduite de refroidissement (170) et conçue pour alimenter le moteur électrique (150) en énergie.

11. Moteur à propulseur liquide selon la revendication 10, comprenant en outre un allumeur (102) connecté à la batterie (151), et installé d'un côté de la chambre de combustion principale (101) pour assurer un allumage dans la chambre de combustion principale (101) au moyen d'une étincelle électrique.
